# EUROPEAN PATENT APPLICATION

(11) **EP 4 618 320 A1**
(43) Date of publication of application: **17.09.2025**
(21) Application number: 23887989.4
(22) Date of filing: 07.11.2023
(51) Int. Cl.: H01R 13/639, H01R 13/629, H01R 13/40, H01R 24/00, H01R 13/502

(54) **FASTENER POSITION ASSURANCE DEVICE AND CONNECTOR ASSEMBLY**

(30) Priority: 07.11.2022 CN 202222955468 U
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2023/130136
(87) International publication number: WO 2024/099300

(57) **Abstract**

The present disclosure provides a connector position assurance and a connector assembly. The connector position assurance includes: a base body having a frame portion, with oppositely disposed connecting portions extending from two sides of the frame portion, and the connecting portions being provided with a pair of first latches which enable the connector position assurance to be fixed and in a pre-assembled state; the frame portion being further provided with a guide surface which guides the base body to be engaged with either of the plug and the socket; and an elastic arm connected to the frame portion, and a free end of the elastic arm being provided with a second latch, which enables the connector position assurance to be fixed and in a locked state after the plug is plugged with the socket. According to the connector position assurance of the present disclosure, effective locking between the plug and the socket is realized through the design of a two-stage latch structure and a guide surface.

## Description

### RELATED APPLICATION

The present disclosure claims the priority of the Chinese utility model patent NO. 202222955468.9, filed on November 7, 2022, and a title of "connector position assurance and connector assembly".

### TECHNICAL FIELD

The present disclosure relates to the technical field of electrical connectors, and particularly to a connector position assurance and a connector assembly.

### BACKGROUND

In the industry of automobile connectors, a connector position assurance (CPA) is usually used to ensure reliable engagement of connector assemblies. In the design, an avoidance structure such as a gap, a hole or a cavity is generally designed to allow a corresponding elastic structure to deform, thereby enabling the CPA to switch back and forth between a pre-assembled position and a locked position.

The CPA structure is generally designed to be pre-assembled on a connector to facilitate customers' operation. However, in the existing CPA, it only designs the relief structure and the elastic structure which are cooperated with each other, but does not design a structure to guide CPA to be mounted or pulled out. As a result, it is not easy for the CPA to smoothly reach the pre-assembled position during mounting or disengage from the connector.

### SUMMARY

An objective of the present disclosure is to provide a connector position assurance (CPA) and a connector assembly. The connector position assurance realizes smooth assembled through the design of a two-stage latch structure and a guide surface, and further realizes effective locking between a plug and a socket.

According to a first aspect of the present disclosure, there is provided a connector position assurance for ensuring the engagement between a plug and a socket, in which the connector position assurance includes:
a base body having a frame portion, with oppositely disposed connecting portions extending from two sides of the frame portion, and the connecting portions being provided with a pair of first latches which enable the connector position assurance to be fixed and in a pre-assembled state; the frame portion being further provided with a guide surface which guides the base body to be cooperated with either of the plug and the socket; and
an elastic arm connected to the frame portion, and a free end of the elastic arm being provided with a second latch, which enables the connector position assurance to be fixed and in a locked state after the plug is plugged with the socket.

According to another aspect of the present disclosure, there is provided a connector assembly, including a plug and a socket which are plugged with each other, and the connector position assurance according to any of the embodiments disposed on the plug or the socket, in which one of the plug and the socket is provided with two oppositely disposed recesses, which are engaged with the first latch, so that the connector position assurance is in a pre-assembled state; the other of the plug and the socket is provided with a protrusion, which lifts the second latch when the plug and the socket are plugged with each other, and after the plug and the socket are plugged with each other, the second latch passes over and engages with the protrusion, so as to retain the connector position assurance in a locked state.

The connector position assurance and the connector assembly disclosed by the present disclosure have the following advantageous effects:
1) The connector position assurance is provided with the pair of first latches, and the second latch located at the free end of the elastic arm, which are matched with a relief structure or a protruding structure on the socket or the plug, so as to achieve the pre-assembled of the connector position assurance, and the effective locking of the plug and the socket by means of the connector position assurance.
2) The frame portion of the connector position assurance is further provided with the guide surface which guides the base body to be cooperated with either of the plug and the socket, so that the connector position assurance can smoothly reach the pre-assembled position and disengage from the connector.
3) The frame portion of the connector position assurance is further provided with the grip segment, and the anti-slip groove is formed on the outer surface of the grip segment. In addition, the grip segment protrudes beyond the assembly surface of the first frame section and the second frame section to form the finger hooking portion, which is convenient for the operator's finger to hook the finger hooking portion, so that the connector position assurance can be smoothly disassembled.
4) The first cantilever section and the frame portion form the preset angle β, which is 160° to 176°, so that the elasticity of the elastic arm can be ensured, thereby enabling the connector position assurance to be fully engaged in the locked position.

### BRIEF DESCRIPTION OF THE DRAWINGS

The following drawings are only intended for schematic illustration and explanation of the present disclosure, and do not limit the scope of the present disclosure. In which,
FIG. 1 illustrates a perspective view of a connector position assurance according to an exemplary embodiment of the present disclosure;
FIG. 2 illustrates a side view of a connector position assurance in FIG. 1;
FIG. 3 illustrates an exploded perspective view of a socket in a connector assembly according to a preferred embodiment of the present disclosure;
FIG. 4 illustrates a perspective view of a connector position assurance connected to a socket and in a pre-assembled state;
FIG. 5 illustrates a cross-sectional view of a connector position assurance connected to a socket and in a pre-assembled state;
FIGS. 6 to 8 illustrate a process of engaging a second latch and a protrusion of a plug in a process where a connector position assurance switches from a pre-assembled state to a locked state; and
FIGS. 9 to 11 illustrate a process of disengaging a connector position assurance and separating a plug from a socket.

### DETAILED DESCRIPTION OF THE PREFERRED EMBODIMENTS

In order to have a clearer understanding of the technical features, objectives and effects of the present disclosure, the specific embodiments of the present disclosure will now be described with reference to the drawings. In the description of the present disclosure, "a plurality of" means two or more unless otherwise specified.

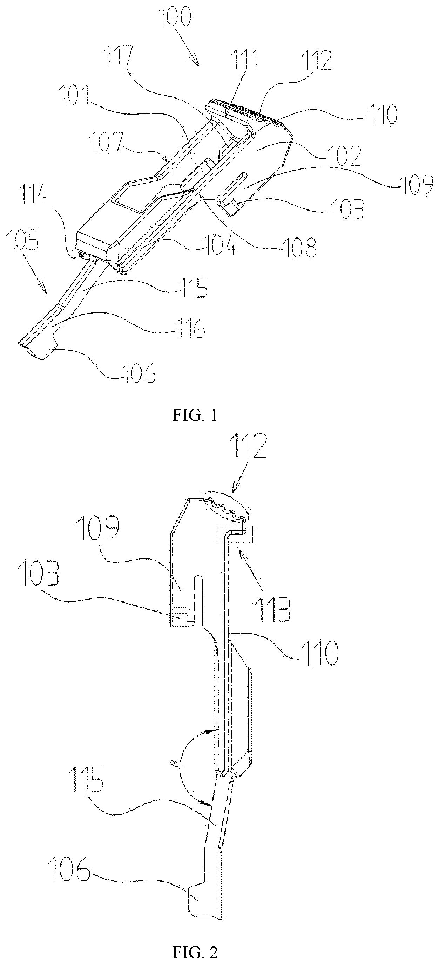

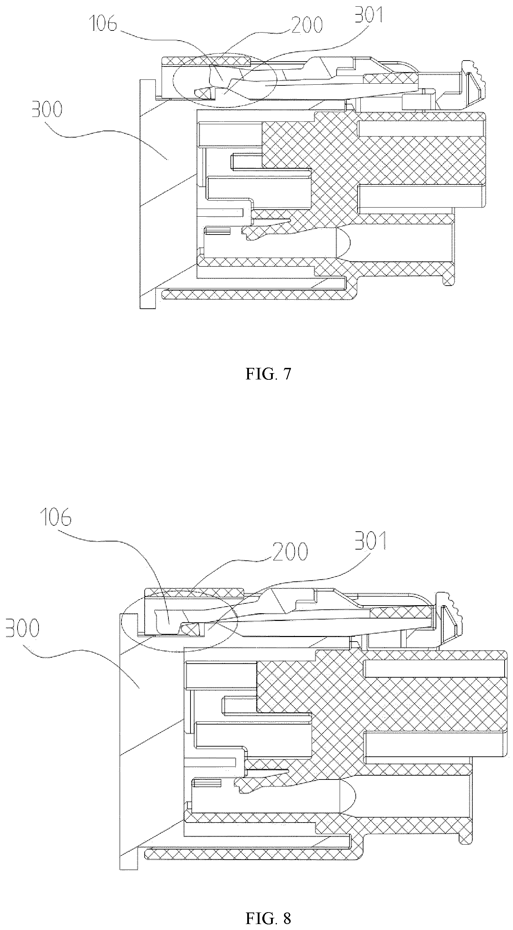

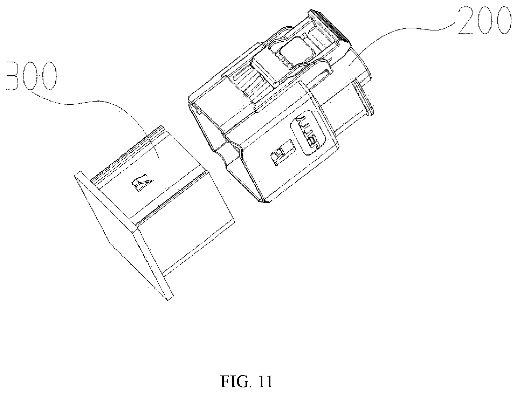

As illustrated in FIGS. 1 to 11, a connector position assurance 100 and a connector assembly are disclosed.

As illustrated in FIG. 1, the connector position assurance 100 of the present disclosure ensures the cooperation between a plug 300 and a socket 200, wherein the connector position assurance 100 includes:
a base body having a frame portion 101, with oppositely disposed connecting portions 102 extending from two sides of the frame portion 101, and the connecting portions 102 being provided with a pair of first latches 103 which enable the connector position assurance 100 to be fixed and in a pre-assembled state; the frame portion 101 being further provided with a guide surface 104 which guides the base body to be engaged with either of the plug 300 and the socket 200; and
an elastic arm 105 connected to the frame portion 101, and a free end of the elastic arm 105 being provided with a second latch 106, and the second latch 106 enables the connector position assurance 100 to be fixed and in a locked state after the plug 300 is plugged with the socket 200.

It should be noted that the connector position assurance 100 in this embodiment is pre-assembled on the socket 200, and locks the socket 200 and the plug 300 after the plugging therebetween. Of course, it will be understood that in other embodiments, the connector position assurance may be pre-assembled on the plug 300, and locks the socket and the plug 300 after the plugging therebetween.

Therefore, the connector position assurance 100 is provided with the pair of first latches 103 and the second latch 106 at the free end of the elastic arm 105, which are matched with a relief structure or a protruding structure on the socket 200 or the plug 300, so as to achieve the pre-assembled of the connector position assurance 100, and the effective locking of the plug 300 and the socket 200 by means of the connector position assurance 100.

Specifically, as illustrated in FIGS. 1 and 2, the frame portion 101 includes a first frame section 107 and a second frame section 108 extending along a guide insertion direction and oppositely disposed, and the oppositely disposed connecting portions 102 are located at rear ends of the first frame section 107 and the second frame section 108 along the guide insertion direction, respectively.

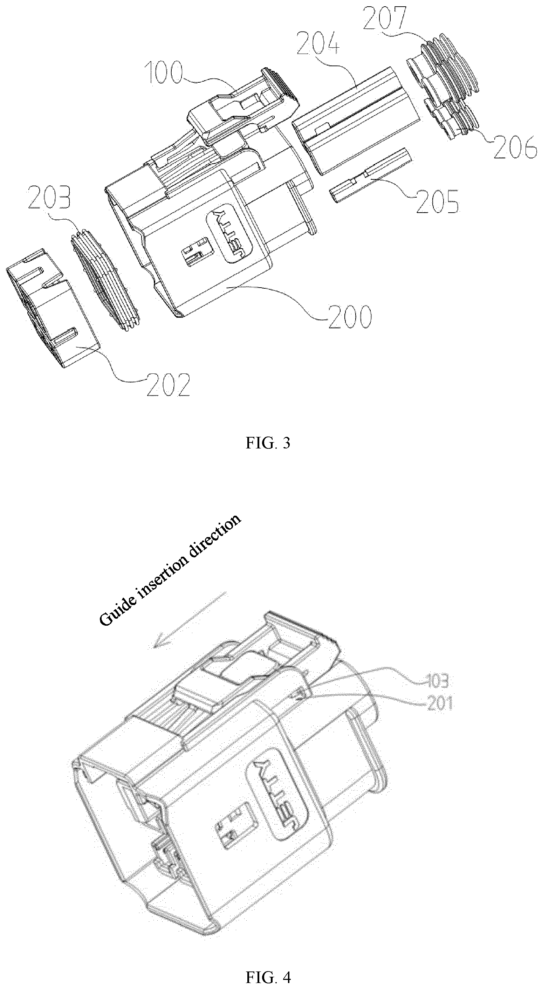

It should be noted that the guide insertion direction is a direction approaching to the socket 200 during the assembling of the connector position assurance 100 on the socket 200, and it may also be understood as a guide insertion direction indicated by an arrow in FIG. 4. Therefore, a front end of the guide insertion direction is an end on a side close to the arrow, and a rear end of the guide insertion direction is an end on a side away from the arrow.

More specifically, the connecting portion 102 is plate-shaped, a groove is formed from an outer edge of the connecting portion 102 towards the interior of the plate to form a snap arm 109, and the first latch 103 is disposed on the snap arm 109. Therefore, when the connector position assurance 100 is assembled on the socket 200 via the first latch 103, the snap arm 109 elastically deforms, so as to make the first latch 103 to be engaged with a recess 201 on the socket 200.

With continued reference to FIG. 1, the guide surface 104 is at least a portion of assembly surfaces 110 of the front ends of both the first frame section 107 and the second frame section 108 along the guide insertion direction. Thus, the connector position assurance 100 can be smoothly pre-assembled on the socket 200 through the guide surface 104.

More specifically, as illustrated in FIGs. 1 and 2, a grip segment 111 is further connected between the rear ends of the first frame section 107 and the second frame section 108 along the guide insertion direction, and an anti-slip groove 112 is formed on an outer surface of the grip segment 111. Therefore, when the connector position assurance 100 is pulled out of the socket 200, a finger of an operator may contact the anti-slip groove 112 to increase the friction, to reduce the required extraction force. Exemplarily, a raised platform surface 117 extends from the grip segment 111 at a position opposite to the anti-slip groove 112, and is configured to abuts against an unlocking button 208 of the socket 200 when the connector position assurance 100 is in the locked state.

Exemplarily, the anti-slip groove 112 is stepped in configuration along the guide insertion direction. Exemplarily, as illustrated in FIG. 2, the grip segment 111 protrudes beyond assembly surfaces 110 of the first frame section 107 and the second frame section 108 to form a finger hooking portion 113, which is more convenient for the operator's finger to hook the finger hooking portion 113.

Referring back to FIG. 1, a third frame section 114 is further connected between the front ends of the first frame section 107 and the second frame section 108 along the guide insertion direction, and the elastic arm 105 extends further forward from a middle position of the third frame section 114 along the guide insertion direction.

Specifically, the elastic arm 105 includes a first cantilever section 115 which extends obliquely in a direction away from the assembly surfaces 110, and a second cantilever section 116 which is bent and connected to the first cantilever section 115. The second latch 106 is disposed at a rear end of the second cantilever section 116, and the second latch 106 protrudes in a direction away from the assembly surfaces 110. Therefore, after the connector position assurance 100 is pre-assembled on the socket 200, the second latch 106 can be better engaged with the corresponding structure of the plug 300.

Exemplarily, as illustrated in FIG. 2, the first cantilever section 115 and the frame portion 101 form a preset angle β, which is 160° to 176°. In this embodiment, the preset angle β is 171°. Exemplarily, the preset angle β may be in a range of 171°±5°. More Exemplarily, the preset angle β may be in a range of 171°±1°. The preset angle β specifically may be 160°, 162°, 165°, 166°, 169°, 170°, 172°, 175°, 176° or the like.

Next, referring to FIGS. 3 to 11, details are given for a connector assembly provided by another aspect of the present disclosure, and the pre-assembled, locking and disassembly processes of the connector position assurance 100.

The connector assembly of the present disclosure includes a plug 300 and a socket 200 which are plugged with each other, and the connector position assurance 100 according to any of the above embodiments disposed on the plug 300 or the socket 200, in which one of the plug 300 and the socket 200 is provided with two oppositely disposed recesses 201, which are engaged with the first latch 103, so as to retain the connector position assurance 100 is in a pre-assembled state; the other of the plug 300 and the socket 200 is provided with a protrusion 301, which lifts the second latch 106 when the plug 300 and the socket 200 are plugged with each other, and after the plug 300 and the socket 200 are plugged with each other, the second latch 106 passes over and engages with the protrusion 301, so as to retain the connector position assurance 100 in a locked state.

Specifically, the connector assembly of the present disclosure is a waterproof connector, and particularly a low-voltage power connector. It can be understood that the connector position assurance 100 described above can be applicable to both the waterproof connector and the non-waterproof connector.

The low-voltage power connector includes two mating components, i.e., the plug 300 and the socket 200, and the CPAis assembled on the socket 200 in this embodiment. Therefore, as illustrated in FIG. 3, the socket 200 is taken as an example, which includes a housing, a terminal secondary locking mechanism 202, a large-gauge terminal 204, a small-gauge terminal 205, a sealing ring 203, a large cable seal 207 and a small cable seal 206.

The housing is a kind of plastic shell manufactured by means of injection molding. As a connector body, the housing is a non-metal member which protects and fixes the terminals and insulates the terminals from the outside. Spring pieces are disposed at five corresponding hole positions of the housing. This design provides a primary locking function after the terminals are mounted in the housing, thereby preventing the terminals from withdrawing.

The terminal secondary locking mechanism 202 is manufactured by injection molding, with a main purpose to strengthen the primary self-locking of the terminals or to provide a mechanism which offers a separate terminal locking force.

The large-gauge terminal 204 and the small-gauge terminal 205 are metal conductors for electric connections, and are machined by stamping. The terminals have surface-tinned contact portions, and are combined with the wires by crimping.

The sealing ring 203, i.e., a silicone sealing ring, is a rubber structural member in the housing to prevent the infiltration of liquids.

The large cable seal 207 and the small cable seal 206 are crimped and crimp-compatible with the large-gauge terminal 204 and the small-gauge terminal 205 respectively, and are rubber structural members which are crimped on the insulating surfaces of the wires to prevent the infiltration of liquids from the hole positions of the connector.

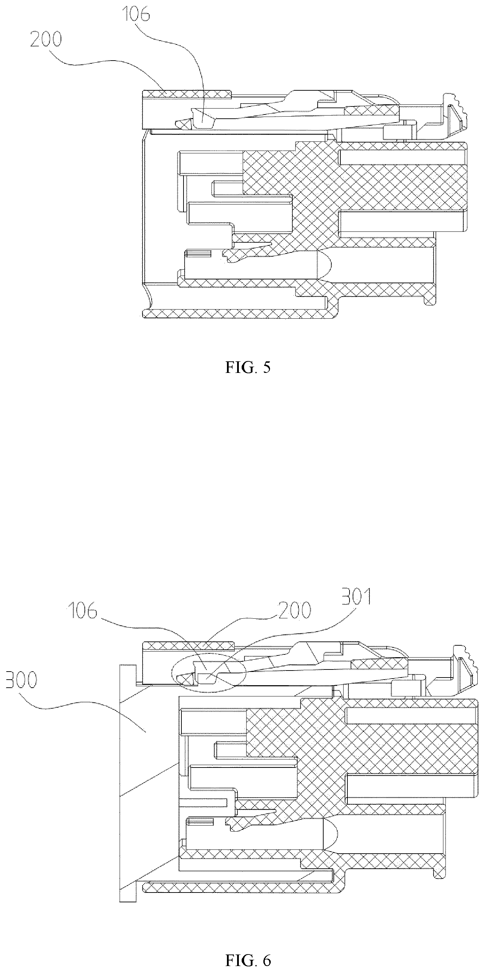

The assembly procedure of the socket 200 and the CPA is as follows:
Step 1: the two types of cables are stripped and then pass through two cable seals with different sizes respectively; that is, the large-gauge cable is corresponding to the large cable seal 207, and the small-gauge cable is corresponding to the small cable seal 206.
Step 2: the two types of terminals with different wire gauges are crimped with the cables which have passed through the cable seals, respectively.
Step 3: the sealing ring 203 is mounted in the housing.
Step 4: the terminal secondary locking mechanism 202 is pre-assembled in the housing.
Step 5: the large and small-gauge terminals crimped with the cables are mounted in the corresponding hole positions of the housing, respectively.
Step 6: the terminal secondary locking mechanism 202 is mounted in a locked position.
Step 7: as illustrated in FIGS. 4 and 5, the CPA is firstly mounted in the pre-assembled position; the CPA is mounted into the housing of the socket 200 through the second latch 106 with the elastic arm 105 and the symmetrical guide surfaces 104 on both sides in the guide insertion direction; at this time, the first latch 103 interferes with the recess 201 of the housing, and the assembly of the socket connector with the CPA in the pre-assembled position is completed.

The process of mounting the CPA in the locked position: as illustrated in FIGS. 6 to 8, a head of a plug connector is inserted into a socket connector through a guide groove, and the second latch 106 of the CPA is deflected by the protrusion 301 of the housing of the plug connector. At this time, the elastic arm 105 deforms and moves upward to disengage from the groove stop surface of the housing of the socket 200. The CPA is pressed again to move forward, and the second latch 106 hooks the protrusion 301 of the plug 300. Therefore, the plug 300 and the socket 200 are fully assembled, and the CPA is finally assembled in the locked position.

The raised platform surface 117 of the CPA abuts against the unlocking button 208 of the socket 200, so that the unlocking button 208 cannot be pressed any more. Without manual operation, the plug 300 cannot be unlocked from the socket connector, which effectively ensures stable signals and electrical energy transmission.

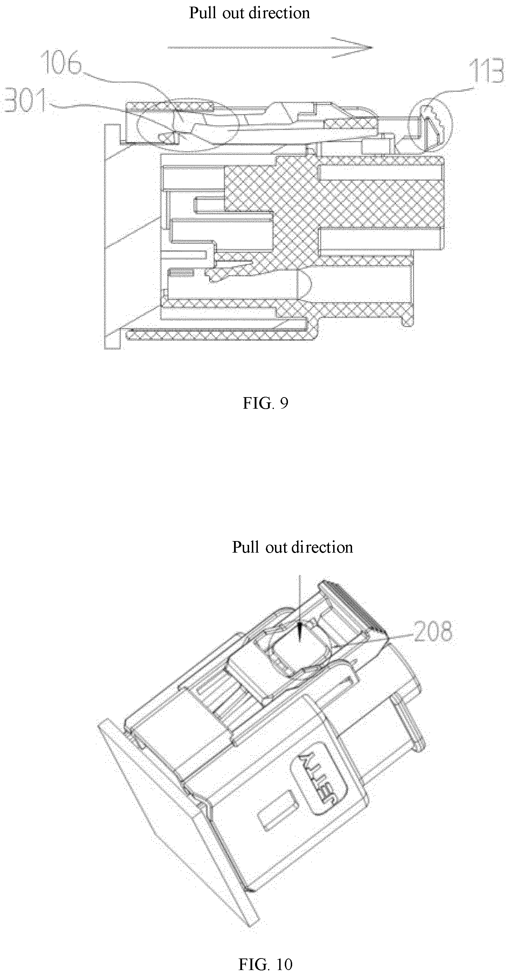

The process of disengaging the plug from the socket connector: as illustrated in FIGS. 9 to 11, firstly, it is necessary to pull the CPA from the locked position to the pre-assembled position through the finger hooking portion 113. Next, by pressing the unlocking button 208 of the socket 200, the plug 300 can be separated from the socket connector.

According to the connector position assurance 100 and the connector assembly of the present disclosure, effective locking between the plug 300 and the socket 200 is realized through the design of the two-stage latch structure and the guide surface 104.

Those described above are only schematic embodiments of the present disclosure, and are not intended to limit the scope of the present disclosure. Any equivalent change or modification made by those skilled in the art without departing from the concept and the principles of the present disclosure should fall within the protection scope of the present disclosure.

## Claims

1. A connector position assurance for ensuring the engagement between a plug and a socket, wherein the connector position assurance comprises:
a base body having a frame portion, with oppositely disposed connecting portions extending from two sides of the frame portion, and the connecting portions being provided with a pair of first latches which enable the connector position assurance to be fixed and in a pre-assembled state; the frame portion being further provided with a guide surface which guides the base body to be engaged with either of the plug and the socket; and
an elastic arm connected to the frame portion, and a free end of the elastic arm being provided with a second latch, which enables the connector position assurance to be fixed and in a locked state after the plug is plugged with the socket.

2. The connector position assurance according to claim 1, wherein the frame portion comprises a first frame section and a second frame section extending along a guide insertion direction and oppositely disposed, and the oppositely disposed connecting portions are located at rear ends of the first frame section and the second frame section along the guide insertion direction, respectively.

3. The connector position assurance according to claim 2, wherein the connecting portion is plate-shaped, a groove is formed from an outer edge of the connecting part towards the interior of the plate to form a snap arm, and the first latch is disposed on the snap arm.

4. The connector position assurance according to claim 2, wherein the guide surface is at least a portion of assembly surfaces of front ends of both the first frame section and the second frame section along the guide insertion direction.

5. The connector position assurance according to claim 2, wherein a grip segment is further connected between the rear ends of the first frame section and the second frame section along the guide insertion direction, and an anti-slip groove is formed on an outer surface of the grip segment.

6. The connector position assurance according to claim 5, wherein the anti-slip groove is stepped in configuration along the guide insertion direction.

7. The connector position assurance according to claim 5, wherein the grip segment protrudes beyond assembly surfaces of the first frame section and the second frame section to form a finger hooking portion.

8. The connector position assurance according to claim 4, wherein a third frame section is further connected between the front ends of the first frame section and the second frame section along the guide insertion direction, and the elastic arm extends further forward from a middle position of the third frame section along the guide insertion direction.

9. The connector position assurance according to claim 8, wherein the elastic arm comprises a first cantilever section which extends obliquely in a direction away from the assembly surfaces, and a second cantilever section which is bent and connected to the first cantilever section; the second latch is disposed at a rear end of the second cantilever section, and the second latch protrudes in a direction away from the assembly surfaces.

10. The connector position assurance according to claim 9, wherein the first cantilever section and the frame portion form a preset angle β, which is 160° to 176°.

11. A connector assembly, comprising a plug and a socket which are plugged with each other, and the connector position assurance according to any of claims 1 to 9 disposed on the plug or the socket, wherein
one of the plug and the socket is provided with two oppositely disposed recesses, which are engaged with the first latch, so as to retain the connector position assurance in a pre-assembled state;
the other of the plug and the socket is provided with a protrusion, which lifts the second latch when the plug and the socket are plugged with each other, and after the plug and the socket are plugged with each other, the second latch passes over and engages with the protrusion, so as to retain the connector position assurance in a locked state.
